# EUROPEAN PATENT APPLICATION

(11) **EP 2 608 231 A1**
(43) Date of publication of application: **26.06.2013**
(21) Application number: 11194976.4
(22) Date of filing: 21.12.2011
(51) Int. Cl.: H01G 9/012, H01G 9/08, H01G 9/15

(54) **Electric component**

(71) Applicant: Henkel AG & Co. KGaA, 40191 Düsseldorf (DE)
(72) Inventor: Winster, Tony, Sawston, Cambridge CB22 3LL (GB); Chua, David, Kings Warren IP28 8FR, Bury St. Edmunds, Suffolk (GB); Lenczuk, Wieslaw, 1149 Budapest (HU)
(74) Representative: Theumert, Gerhard Josef

(57) **Abstract**

Electric component (1) comprising a first electrode (8) and a second electrode (7); a lead frame (3) with a first part (4) and a second part (5), which are separated to each other, wherein a projecting part (9) of the first electrode (8) is conductive connected to the first part (4), wherein the second electrode (7) is conductive connected to the second part (5) and wherein the second electrode (7) is connected with the first part (4) and/or to the second part (5) via a B-stage material (11, 20); and an encapsulation (13), encapsulating at least second electrode (7).

## Description

The present invention relates to an electric component, for example an electrolytic capacitor like a solid electrolytic capacitor. Conventional electric component like known solid electrolytic capacitors are often formed by pressing a metal powder like for example tantalum around a lead wire, sintering the pressed part, anodizing the sintered anode, and thereafter applying a solid electrolyte. The resulting capacitor element contains an anode lead that extends outwardly from the anode body and is electrically connected at its end to an anode termination, for example via welding. Similarly, the cathode is electrically connected to a cathode termination, in many cases via a conductive adhesive. In certain cases, a portion of the anode termination is then attached to a carrier referred as the "lead frame" using an conductive adhesive that assembles the capacitor casing into a "J-shaped" or "undertab" configuration such that it is present on the end or both ends of the capacitor.

During manufacturing & assembly of electric components like for example capacitors, especially during the connection of a capacitor element to an anode and cathode termination, the capacitor layer or adhesive cracks due to several reasons like for example a wrong amount of non conductive adhesive which might already be cured prior the assembly of the anode which is used & applied as an electrical insulator between the cathode layer of the capacitor & the lead frame. The connection between the welded anode and the cathode termination for the undertab Capacitor design generates large volume of stress impacting the weld of the anode and the conductive adhesive to the cathode which connects cathode layer of the body to the lead frame.

An object of the present invention is to overcome the aforementioned drawback and to provide an improved electric component.

The mentioned object is solved with the invention described with the features of claim 1. Advantageous embodiments of the invention are described with the dependent claims.

The invention overcomes the identified disadvantages and solves the mentioned object by providing an electric component comprising a first electrode and a second electrode; a lead frame with a first part and a second part, which are separated to each other, wherein a projecting part of the first electrode is conductive connected to the first part and wherein the second electrode is conductive connected to the second part and wherein the second electrode is connected with the first part and/or to the second part via a B-stage material and comprising an encapsulation, encapsulating at least the second electrode.

One advantage of the invention is the use of a B-stage material for a connection between the second electrode with the first part and/or to the second part. The B-stage material can be conductive or non-conductive. Preferably the B-stage material is after final curing non-conductive, preferably by comprising electrical conductive particles, for a connection between the second electrode with the first part and/or conductive at least after final curing for the connection of the second electrode to the second part. Any used B-stage material preferably comprises at least two chemical compositions, a first composition and a second composition, having curing temperatures or curing temperature ranges sufficiently separated to allow the composition with the lower curing temperature, the first composition, to cure without curing the composition with the higher curing temperature, the second composition, wherein the first composition has been cured and the second composition is uncured. The curing of the first composition is known as B-staging or pre-curing; the curing process of the second composition is named typical or final curing. Such a B-stage material or B-stageable underfill is known for example from the production of wafers. Such a B-stage material is for example known from the International Patent Application WO2004/048491A1 which is incorporated herein in its entirety by reference thereto for all purposes.

The B-stage material is preferably able to be solidified or at least partly solidificated after application to the first part of the lead frame. The solidification of the B-stage material is done by said B-staging, which means that the B-stage material undergoes an initial heating after its placement on the lead frame to preferably result in a smooth coating without residual solvent.

If the starting B-stage material is a solid, it is a possibility that the solid is dispersed or dissolved in a solvent to form a paste and the paste applied to the lead frame. The B-stage material is then heated to evaporate the solvent, leaving a solid, but uncured material on the lead frame. If the starting B-stage material is a liquid or paste, the B-stage material is dispensed onto the lead frame and heated to partially cure it to a solid state. A typical application method for the B-stage material, especially if the B-stage material or a paste, is a pneumatic dispense. An advantageous application of the B-stage material to the lead frame could be screen printing, stencil printing or jetting spraying. Of course any other application method known to a person skilled in the art is also possible

Sais pre-curing or B-staging of the B-stage material can preferably reached during a heating process at a temperature range between 70°C and 150°C lasting between 10 minutes and two hours, preferably during a heating process lasting about one hour at a temperature about 120°C, most preferred at a temperature lower than 150°C. The final curing of the material is preferably reached at the curing or final curing temperature of any additional conductive or non-conductive adhesive used for example between an electrode built as a cathodic layer as part of a capacitor and any part of the lead frame.

The typical or final cure of the B-stage material the B-stage material can preferably reached at a temperature range between 120°C and 250°C at a heating process lasting between 10 minutes and two hours, preferably reached at a temperature of about 175°C at a heating process lasting about one hour.

The curing processes can for example be initiated and advanced by irradiation (such as with UV light) for the B-staging, and then by heat for the final cure, or both the B-staging and final cure can be initiated and advanced by heat.

An advantage of said B-stage material is that it can have at least after B-staging adhesive characteristics and/or flexible and/or resilient characteristics, preferably at least adhesive and flexible characteristics or adhesive and resilient characteristics so that the part of the electric element which is in contact to the first part and/or second part via the B-stage material is during said state fixed to the first part and/or second part because of the adhesive characteristic. In addition or as an alternative any problems resulting e.g. from a marginal deviation of the optimal installation position of any of said electrodes and/or from differences in height of the level of the first and second part, or of the amount of used conductive adhesive compared to the B-stage material could be avoided because of the flexible and/or resilient characteristics of the B-stage material after B-staging. According to this at least a demolition of the capacitor element itself or other parts of the electric element could be prevented by using a said B-stage material.

A further advantage is to use a B-stage material for the said conductive connection between the second electrode and the second part, wherein the B-stage material is after final curing conductive. Preferably the B-stage material comprises electrical conductive particles. In addition or even as an alternative it is also possible to use a B-stage material for a non-conductive connection between the second electrode and the first part, wherein the B-stage material is after final curing non-conductive.

A further advantage is providing a capacitor, especially an undertab capacitor as said electric component comprising a capacitor element comprising at least an anode terminal used as first electrode containing a projecting part; a solid electrolyte and a cathodic layer used as second electrode; said lead frame with the first part and the second part, which are separated to each other; wherein the cathodic layer is connected to the second part in a conductive manner via a conductive adhesive and wherein a projecting part of the anode terminal is connected to the first part in a conductive manner and wherein the cathodic layer is in contact to the first part via a B-stage material in a non-conductive manner; and comprising an encapsulation of the capacitor element , encapsulating at least the capacitor element with the cathodic layer.

It shall be understood that if any capacitor is used as an electric component, the connection between the second electrode, the cathodic layer, and the first part of the lead frame needs not necessarily be placed directly between the cathodic layer and the first part. It is in addition or especially as an alternative possible to provide this non-conductive connection preferably via said B-stage material between any other part or layer of the capacitor element and the first part.

If the electric element is built like said capacitor, especially like an undertab capacitor, it could be advantageous to use a B-stage material for said conductive adhesive.

As an alternative to the mentioned capacitor it could also be possible to provide a different capacitor, especially a J-shaped capacitor as said electric component comprising a capacitor element comprising at least an anode terminal used as first electrode containing a projecting part; a solid electrolyte and a cathodic layer used as second electrode; said lead frame with the first part and the second part, which are separated to each other; wherein the cathodic layer is connected to the second part in a conductive manner via a B-stage material, which is after final curing conductive and wherein a projecting part of the anode terminal is connected to the first part in a conductive manner and comprising an encapsulation of the capacitor element, encapsulating at least the capacitor element with the cathodic layer.

The said conductive adhesive used in any said embodiment of an electric component can comprise a resin composition with conductive metal particles. The metal particles may be silver, copper, gold, platinum, nickel, zinc, bismuth, etc. The resin composition may include a thermoset resin (e.g., epoxy resin), curing agent (e.g., acid anhydride), and coupling agent (e.g., silane coupling agents). Suitable conductive adhesives are described in U.S. Patent Application Publication No. 2006/0038304 to Osako, et al., which is incorporated herein in its entirety by reference thereto for all purposes. It is possible to use for example a one component, silver-filled, non-bleeding, electrically conductive epoxy adhesive with long shelf life at room temperature, for instance a molding encapsulant power pre-formed in pellets purchasable under the brand Hysol Eccobond CE3513.

A further improvement would be the use of a B-stage material as said conductive adhesive between the second electrode, e.g. the cathodic layer and the second part, wherein this second B-stage material is after the final curing conductive. The same afore- or below mentioned characteristics of B-stage materials apply for the said B-stage.

As encapsulation it is possible to use a resin casing as known to anyone skilled in the art, which may then be filled with silica or any other known encapsulating material. Is it for example possible to use a gold, non-halogenated molding powder, for instance an adhesive purchasable under the brand Hysol GR2310.

A said capacitor element contains preferably at least an anode body, a dielectric layer overlying the anode body, and a solid organic electrolyte layer overlying the dielectric layer. The capacitor and especially the anode body may be formed using any technique known in the art. Such an anode body is for example described in German Patent Application Publication No. 102008041111A1 which is incorporated herein in its entirety by reference thereto for all purposes.

As said the B-stage material used for a connection between the second electrode, e.g. the cathodic layer of the capacitor element and the first part of the lead frame, e.g. the anode termination is preferably non-conductive especially to avoid an electrical connection between both parts. A suitable B-stage material is purchasable under the brand Ablestik™ ABLECOAT 8008NC. Said B-stage material can be applied to the cathodic layer for example by stencil printing or any other method described above and then B-staged in an oven. Some advantages of said materials are that it is non-conductive, snap curable after B-staging and has a high adhesion to the lead frame surface. To provide a recommended B-Stage condition it shall be heated for example in a 15 minute ramp to 115°C and heated for further 60 minutes at 115°C. A typical curing performance is reached by heating the material in for example a 30 minute ramp to 175°C and a further heating for 60 minutes at 175°C. The recommended snap cure condition would be for example 60 seconds at 230°C.

As said above in addition or even as an alternative a different second B-stage material could be used for a connection between the second electrode, e.g. the cathodic layer or the capacitor element, and the second part of the lead frame, e.g. the cathode termination. Such a B-stage material is preferably conductive to provide an electrical connection between said parts at least after final curing.

A suitable second B-stage material is purchasable under the brand Ablestik™ 8008MD. Said B-stage material can be applied to the cathodic layer for example by stencil printing or any other method described above and then B-staged in an oven. Some advantages of said materials are that it is electrically conductive, thermally conductive and has a low modulus. To provide a recommended B-Stage condition it can be heated for example in a 10 minute ramp to 115°C and heated for further 60 minutes at 115°C. A typical curing performance is reached by heating the material in for example a 30 minute ramp to 175°C and a further heating for 60 minutes at 175°C.

If B-stage materials for both connection are used both B-stage should have preferably the same or at least similar B-staging conditions and/or typical curing conditions so that B-staging and/or final curing of both B-stage materials is obtained in one single step.

If a solvent is used or if any of the B-stage materials contains a solvent, the solvent content is preferably in the range of 10 to 15 wt%. As an alternative also completely solvent-free formulations are possible, as well as solvent contents up to about 50 wt%

As said above any of the used B-stage material or B-stage curable composition can include a solid component heat curable at a first temperature; and also a liquid component, which is either heat curable at a second temperature or curable upon exposure to radiation in the electromagnetic spectrum; and a heat cure catalyst for the solid curable component. As the solid heat curable component, epoxies, episulfides, maleimides, itaconimides and nadimides are particularly desirable.

The epoxy resin in the solid state may include the mono-functional epoxy compounds: C₄-C₂₈ alkyl glycidyl ethers; C₂-C₂₈ alkyl- and alkenyl-glycidyl esters; and C₁-C₂₈ alkyl- and mono-phenol glycidyl ethers; as well as the multifunctional epoxy compounds: polyglycidyl ethers of pyrocatechol, resorcinol, hydroquinone, 4,4'-dihydroxydiphenyl methane (or bisphenol F, such as RE-303-S or RE-404-S available commercially from Nippon Kayuku, Japan), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphenyl)methane; polyglycidyl ethers of transition metal complexes; chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; N,N'-diglycidylaniline; N,N'-dimethyl-N,N'-diglycidyl-4,4'-diaminodiphenyl methane; N,N,N',N'-tetraglycidyl-4,4'-diaminodiphenyl methane; N,N'-diglycidyl-4-aminophenyl glycidyl ether; N,N,N',N'-tetraglycidyl-1,3-propylene bis-4-aminobenzoate; phenol novolac epoxy resin; cresol novolac epoxy resin; and combinations thereof.

Among the commercially available epoxy resins in the solid state suitable for use in the present invention are polyglycidyl derivatives of phenolic compounds, such as those available from Resolution Performance, under the EPON tradename, such as EPON 1009F [bisphenol A epoxy resin (CAS No. 25036-25-3)], EPON 1001 F, EPON 1002F, EPON 1004F, EPON 1007F, EPON 3001, EPON 3002, EPON 2002, EPON 2003, EPON 2004, EPON 2005, EPON 2012, EPON 2014, EPON 2024, and EPON 2042; from Dow Chemical Co. under the DER trade designation, such as DER 331, DER 332, DER 383, DER 354, and DER 542; from Vantico Inc., Brewster, New York under the ARALDITE tradename, such as ARALDITE [phenol-4,4'-(1-methylethylidene)bis with (chloromethyl)oxirane (CAS No. 25068-38-6)], ARALDITE ECN 1299 [formaldehyde, polymer with (chloromethyl)oxirane and 2-methylphenol, melting point 85-100°C (CAS No. 29690-82-2)] and ARALDITE ECN 1285 [formaldehyde, polymer with (chloromethyl)oxirane and 2-methylphenol, melting point 80-90°C (CAS No. 29690-82-2)], and ARALDITE GT 7097 US [(phenol, 4-(1,1-dimethylethyl), polymer with (chloromethyl)oxirane and 4,4'-(1-methylethylidene)bis, melting point 113-123°C (CAS No. 67924-34-9)]; and from Nippon Kayaku, Japan, BREN-S. Other suitable epoxy resins include polyepoxides prepared from polyols and the like and polyglycidyl derivatives of phenol-formaldehyde novolacs, the latter of which are available commercially from Dow Chemical Company under the tradename DEN, such as DEN 431, DEN 438, and DEN 439.

Polyglycidyl adducts of amines, aminoalcohols and polycarboxylic acids are also useful in this invention, commercially available resins of which include GLYAMINE 135, GLYAMINE 125, and GLYAMINE 115 from BP Chemicals, LTD.; ARALDITE MY 720, ARALDITE MY 721, ARALDITE MY 0500, and ARALDITE MY 0510 from Vantico Inc.

Of course combinations of the different epoxy resins are also desirable for use herein.

In addition to epoxies, episulfides are desirable as well, whether they are full or partial episulfides, provided that they are in the solid state. Episulfides may be commercially available or readily prepared from the corresponding epoxy through known synthetic methods.

As said above a suitable B-stage material is for example known from the International Patent Application WO2004/048491A1 which is incorporated herein in its entirety by reference thereto for all purposes.

A further aspect of the invention is a method for producing an electric component comprising the steps:
- providing a lead frame with a first part and a second part, which are separated to each other,
- dispensing a B-stage material on the first part and/or the second part of the lead frame,
- pre-curing the B-stage material,
- providing a first electrode and a second electrode,
- connecting the first part to the first electrode in a conductive manner as well as connecting the second part and the second electrode in a conductive manner,
- final curing the B-stage material and
- encapsulating the second electrode with an encapsulation.

A further advantage would be a method for producing a capacitor, especially built as an undertab capacitor, as an electric component comprising the steps:
- providing a lead frame with a first part and a second part, which are separated to each other,
- dispensing a B-stage material on the first part of the lead frame, which is after final curing non-conductive,
- dispensing a conductive adhesive on the second part of the lead frame,
- pre-curing the B-stage material to provide a B-stage condition of the B-stage material,
- placing a capacitor element on the lead frame, wherein the capacitor element comprises at least an anode terminal used as first electrode containing a projecting part; a solid electrolyte and a cathodic layer used as second electrode, wherein the capacitor element is in connected to the first part of the lead frame via the B-stage material and the cathodic layer is connected to the second part of the lead frame via the conductive adhesive,
- connecting the anode terminal in a conductive manner with the first part via a mechanical and/or material connection,
- curing the conductive adhesive and final curing the B-stage material and
- encapsulating the capacitor element with the cathodic layer with an encapsulation.

A further advantage would be to use such a B-stage material and/or a conductive adhesive that the final curing of the B-stage material is reached at the curing or final curing temperature of the conductive adhesive between the second part and said cathodic layer.

A further advantage would be the use of a conductive adhesive, which is also a B-stage material and wherein the said B-stage material is pre-cured in a single step together with the first B-stage material to provide B-stage conditions of both B-stage materials.

As an alternative a further advantage would be a method for producing a capacitor, especially built as an J-shaped capacitor, as an electric component comprising the steps
- providing a lead frame with a first part and a second part, which are separated to each other,
- dispensing a B-stage material on the second part of the lead frame, which is after final curing conductive,
- providing a lead frame with a first part and a second part, which are separated to each other,
- pre-curing the B-stage material to provide a B-stage condition of the B-stage material,
- placing a capacitor element on the lead frame, wherein the capacitor element comprises at least an anode terminal used as first electrode containing a projecting part; a solid electrolyte and a cathodic layer used as second electrode, wherein the cathodic layer is connected to the second part via the B-stage material,
- connecting the anode terminal in a conductive manner to the first part via a mechanical and/or material connection,
- final curing the B-stage material and
- encapsulating the capacitor element with the cathodic layer with an encapsulation.

A further advantage would be to use such a B-stage material that said pre-curing of at least the B-stage material is reached during a heating process at a temperature range between 70°C and 150°C lasting between 10 minutes and two hours, preferably during a heating process lasting about one hour at a temperature about 120°C, most preferred at a temperature lower than 150°C. In addition or as an alternative it could also be advantageous that the final curing of at least the B-stage material is reached at a temperature range between 120°C and 250°C at a heating process lasting between 10 minutes and two hours, preferably reached at a temperature of about 175°C at a heating process lasting about one hour. Furthermore it could be advantageous that UV or visible light radiation is used to pre-cure at least the B-stage material to provide a B-stage condition of the B-stage material.

Preferred embodiments of the invention are described with the figures.
Figure 1 shows a schematic sectional view of a electronic component according to the invention built as a undertab capacitor.
Figure 2 shows a schematic sectional view of a electronic component according to the invention built as a J-shaped capacitor.

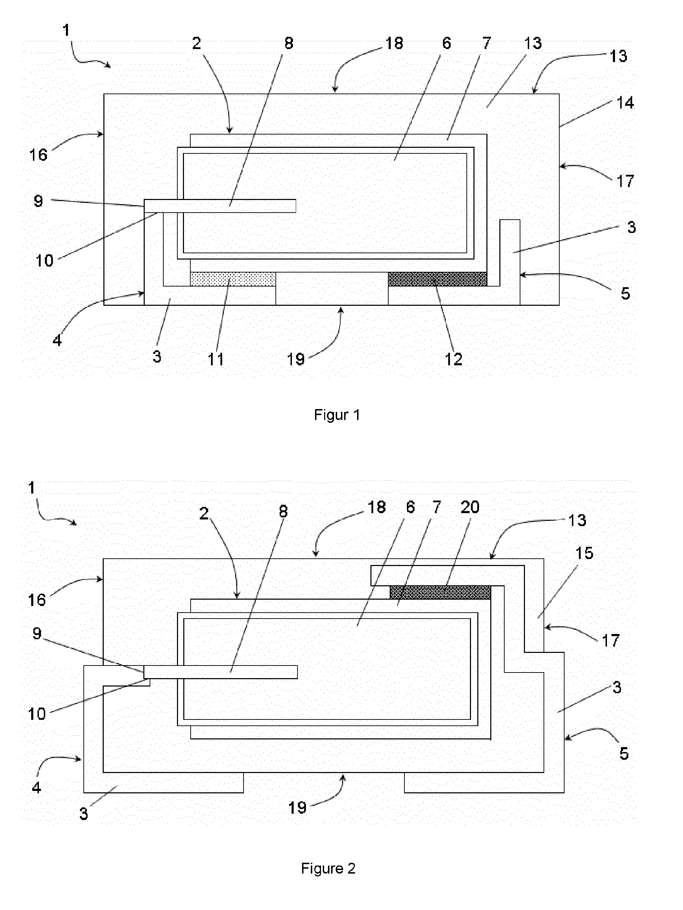

A solid electrolytic capacitor 1 in an undertab design according to the invention shown in figure 1 comprises a capacitor element 2 with at least a projecting anode terminal 8 as a first electrode as well as a solid electrolyte 6 with a cathodic layer 7 as a second electrode. The capacitor element 2 has a generally rectangular shape and contains a front side 16, a rear side 17 as well as top and bottom sides 18 and 19, respectively. The projecting anode terminal 8 extends with a distal part 9 from the front side 16 of the capacitor element 2 in a longitudinal direction. The solid electrolyte 6 is built as an anode body, and is overlied by several layers which are not shown. For example it is possible to provide a dielectric layer overlying the anode body and an organic solid organic electrolyte layer overlying the dielectric layer. In the embodiment illustrated the dielectric layer and solid organic electrolyte layer overlying the anode body at each side of the capacitor element 2, i.e. at the front side 16, rear side 17, top side 18, bottom side 19 and the side surfaces.

The cathodic layer 7 can comprise a graphite layer overlying the organic solid organic electrolyte layer, and a silver layer overlying the graphite layer, wherein both layers overly each side of said solid organic electrolyte layer, except for the front side 16. Thus, in this embodiment, the front side 16 contains the solid organic electrolyte, but is generally free of the graphite and silver layers. Of course, it should be understood that such layers may be applied to any sides of the capacitor 1, and need not be applied in the manner illustrated. It should be furthermore understood that the solid electrolyte 6 and/or the cathodic layer 7 can comprise more, less or different layers as mentioned in the embodiment and can be designed like any respective part of a capacitor 1 known to a person skilled in the art.

The capacitor 1 comprises furthermore a lead frame 3 consisting of two parts, an anodic end 4 as a first part and a cathodic end 5 as a second part, wherein the cathodic layer 7 is in contact with the cathodic end 5 via a conductive adhesive 12. The used conductive adhesive 12 is a one component, silver-filled, non-bleeding, electrically conductive epoxy adhesive with long shelf life at room temperature, for instance an adhesive purchasable under the brand Hysol Eccobond CE3513.

As an alternative it is also possible to use a conductive B-stage material for the connection between the cathodic layer 7 and the cathodic end 5. A suitable B-stage material is purchasable under the brand Ablestik™ 8008MD. Said B-stage material can be applied to the cathodic end 5 for example by any pneumatic dispensing method; but also screen printing, stencil printing, jetting spraying and other application methods are possible.

In addition the distal part 9 of the anode terminal 8 is connected to the anodic end 4 in a conductive manner via a material or mechanical connection, in the shown example via a weld 10. Furthermore the capacitor element 2 is in contact to the anodic end 4 via a non conductive B-stage material 11 between the cathodic layer 7 and the anodic end 4. A suitable B-stage material 11 is purchasable under the brand Ablestik™ ABLECOAT 8008NC. Said B-stage material 11 can be applied to the anodic end 4 for example by any pneumatic dispensing method; but also screen printing, stencil printing, jetting spraying and other application methods are possible.

Furthermore the capacitor 1 comprises an encapsulation 13, encapsulating at least the capacitor element 2 with the cathodic layer 7. As encapsulation 13 it is possible to use a resin casing 14 as known to anyone skilled in the art, which may then be filled with silica or any other known encapsulating material 15. It is for example possible to use a gold, non-halogenated molding powder as encapsulating material 15, for instance a molding encapsulant power pre-formed in pellets purchasable under the brand Hysol GR2310.

To manufacture such a capacitor 1 you have to provide a lead frame 3 with a first part, the anodic end 4, and a second part, the cathodic end 5. Furthermore a B-stage material 11, in the shown embodiment a non-conductive B-stage material 11 is placed on anodic end 4 of the lead frame 3. As an alternative it could be also advantageously to place this B-stage material 11 on the outer region of the cathodic layer 7, which will be connected to the anodic end 4.

In addition a conductive adhesive 12, for example the aforementioned Hysol Eccobond CE3513 is dispensed on cathodic part 5 of the lead frame 3. As said below it is also possible to place a second B-stage material on the cathodic part 5 which should be conductive. Furthermore it is also possible to dispense the conductive adhesive 12 or the conductive B-stage material on the outer region of the cathodic layer 7, which will be connected to the cathodic end 5.

After placing the B-stage material 11 is pre-cured or B-stage heated to provide a B-stage condition of the B-stage material 11. If a second B-stage material is used instead of or as the said conductive adhesive 12 the first B-stage material 11 and said second B-stage material are preferably pre-cured both simultaneously. The said pre-curing or B-stage heating is reached during a heating process at a temperature range between 70°C and 150°C lasting between 10 minutes and two hours, preferably during a heating process lasting about one hour at a temperature about 120°C, most preferred at a heating process with a temperature lower than 150°C.

An advantage of the use of said B-stage material 11 is that said B-stage material 11 has after precuring adhesive and also flexible characteristics. This means that the B-stage material 11 is able to bond the capacitor element 2 to the lead frame 3 but is still spongy so that any problems resulting e.g. from any marginal deviation of the optimal installation position of any of said electrodes, in the available case the anode terminal 8 and the cathodic layer 7, and/or from differences in height of the level of the anodic end 4 and the cathodic end 5 and/or or of the amount of used conductive adhesive 11 compared to the B-stage material 10 could be avoided. The same can apply for the second B-stage material if it is used as or instead of said conductive adhesive 11.

After that the capacitor element 2 comprising at least an electrolyte 6, a cathodic layer 7 and an anode terminal 9 is placed on the lead frame 3, wherein the cathodic layer 7 is connected with or mounted on the anodic end 4 of the lead frame 3 via the non-conductive B-stage material 11 and the cathodic layer 7 is in connected to or mounted on the cathodic end 5 of the lead frame 3 via the conductive adhesive 12 in a conductive manner or as an alternative via the second conductive B-stage material.

In addition the preferably projecting anode terminal 9 is connected to the anodic end 4 in a conductive manner via welding and/or clamping. Preferably by use of a clamp pressure is applied to the assembly to help level the anode terminal 9 to the lead frame 3 during welding. In the following or during clamping the B-stage material 11 as well as the conductive adhesive 12 and the second conductive B-stage material respectively is cured.

This final curing of the B-stage material 11 is preferably reached at the curing temperature of the conductive adhesive 12 between the cathodic layer 7 and cathodic end 5 of the lead frame 3. If a second B-stage material is used as a conductive adhesive 12 the final curing of the B-stage material 11 is preferably reached at the final curing temperature of the second B-stage material. So if a second B-stage material is used instead of or as the said conductive adhesive 12 the first B-stage material 11 and said second B-stage material are preferably final cured simultaneously.

The typical or final cure of the B-stage material 11 or the B-stage materials is reached at a temperature range between 120°C and 250°C at a heating process lasting between 10 minutes and two hours, preferably reached at a temperature of about 175°C at a heating process lasting about one hour.

For example it is possible to use said Ablestik™ ABLECOAT 8008NC or a similar composition as a B-stage material 11. To provide a recommended B-Stage condition it shall be heated for example in a 15 minute ramp to 115°C and heated for further 60 minutes at 115°C. A typical curing performance is reached by heating the material in for example a 30 minute ramp to 175°C and a further heating for 60 minutes at 175°C.

If the aforementioned Ablestik™ 8008MD or a similar composition is used as an alternative for the conductive adhesive 12 it would have similar temperature ranges to provide a recommended B-Stage condition as well as the typical curing performance. To provide a recommended B-stage condition it can be heated for example in a 10 minute ramp to 115°C and heated for further 60 minutes at 115°C. A typical curing performance is reached by heating the material in for example a 30 minute ramp to 175°C and a further heating for 60 minutes at 175°C.

In a last step an encapsulation 13 of at least the capacitor element 2 is provided comprising a resin casing 14 as known to anyone skilled in the art, which is then filled with a gold, non-halogenated molding powder as encapsulating material 15, for instance a molding encapsulant power pre-formed in pellets purchasable under the brand Hysol GR2310. Is shall be understood that for example the anodic end 4 and the cathodic end 5 are not covered by the encapsulation 13 to provide possibility for an electric connection to the capacitor 1. As an alternative it is also possible that said ends 4, 5 protrude over the encapsulation 13.

Advantages are especially a possibility of providing a larger contact area for the parts to be connected compared to conventional capacitors. Furthermore better electrical properties can be reached by using the aforementioned B-stage materials or adhesives as well as a higher yield. It could be also possible to apply the adhesives and/or B-stage materials on the leadframes prior to the component assembly process to increase throughput.

Figure 2 shows a J-shaped electrolytic capacitor 1 as electric component according to the invention. The shown capacitor 1 comprises a capacitor element 2 with a anode terminal 8 as a first electrode with a distal or projecting part 9 as well as a solid electrolyte 6 with a cathodic layer 7 as a second electrode. The capacitor element 2 is similar to the element shown in figure 1 and has a generally rectangular shape and contains a front side 16, a rear side 17 as well as top and bottom sides 18 and 19, respectively. The projecting anode terminal 8 extends with a distal part 9 from the front side 16 of the capacitor element 2 in a longitudinal direction. The solid electrolyte 6 is built as an anode body, and is overlied by several layers which are not shown and as described above for the capacitor element shown in figure 1.

The capacitor 1 comprises furthermore a lead frame 3 consisting of two parts, an anodic end 4 as a first part and a cathodic end 5 as a second part, wherein the cathodic layer 7 is in contact with the cathodic end 5 via a B-stage material 20. The B-stage material 20 used in the present embodiment is a conductive B-stage material 20, e.g. purchasable under the brand Ablestik™ 8008MD. Said B-stage material can be applied to the cathodic end 5 for example by any pneumatic dispensing method; but also screen printing, stencil printing, jetting spraying and other application methods are possible. In addition the distal part 9 of the anode terminal 8 is connected to the anodic end 4 in a conductive manner via a material or mechanical connection, in the shown example via a weld 10.

Furthermore the capacitor 1 comprises an encapsulation 13, encapsulating at least the capacitor element 2 with the cathodic layer 7. As encapsulation 13 it is possible to use a resin casing 14 and a encapsulating material 15 as described for the embodiment shown with figure 1.

To manufacture such a J-shaped capacitor 1 you have to provide a lead frame 3 with the anodic end 4 and the cathodic end 5. Furthermore a B-stage material 20, in the shown embodiment a conductive B-stage material 20 is placed on the cathodic end 5. As an alternative it could be also advantageously to place this B-stage material 11 on the outer region of the cathodic layer 7, which will be connected to the cathodic end 5. After placing the B-stage material 20 on the cathodic end 5 the B-stage material 20 is pre-cured to provide a B-stage condition of the B-stage material 20.

An advantage of the use of said B-stage material 20 is that it has after precuring adhesive and also flexible characteristics. This means that the B-stage material 20 is able to connect the capacitor element 2 to and also with the lead frame 3 but is still spongy so that any problems resulting e.g. from any marginal deviation of the optimal installation position of any of said electrodes, in the available case the anode terminal 8 and the cathodic layer 7, and/or from differences in height of the level of the anodic end 4 and the cathodic end 5 could be avoided.

After precuring the B-stage material 20 the described capacitor element 2 s placed on the lead frame 3, wherein the cathodic layer 7 is connected to or mounted on the cathodic end 5 via the conductive B-stage material 20 and the distal part 9 of the anode terminal 8 is connected to the anodic end 4 in a conductive manner via welding.

The following final cure of the B-stage material 20 is afterwards reached at a temperature range between 120°C and 250°C at a heating process lasting between 10 minutes and two hours, preferably reached at a temperature of about 175°C at a heating process lasting about one hour. If the aforementioned Ablestik™ 8008MD is used it can be heated for example in a 10 minute ramp to 115°C and heated for further 60 minutes at 115°C to provide a recommended B-stage condition. A typical or final curing performance is reached by heating the material in for example a 30 minute ramp to 175°C and a further heating for 60 minutes at 175°C.

In a last step an encapsulation 13 of at least the capacitor element 2 is provided comprising a resin casing 14 as known to anyone skilled in the art, which is then filled with a gold, non-halogenated molding powder as encapsulating material 15, e.g. the molding encapsulant power as described above. It could be necessary or even advantageous to bent the distal parts of the anodic end 4 and the cathodic end 5 which protrude from the encapsulation around this encapsulation 13 so that the connection parts of said ends 4, 5 are located on the bottom side 19 of the capacitor.
- 1: capacitor
- 2: capacitor element
- 3: lead frame
- 4: anodic end
- 5: cathodic end
- 6: solid electrolyte
- 7: cathodic layer
- 8: anode terminal
- 9: distal part
- 10: weld
- 11: B-stage material
- 12: conductive adhesive
- 13: encapsulation
- 14: resin casing
- 15: encapsulating material
- 16: front side
- 17: rear side
- 18: top side
- 19: bottom side
- 20: conductive B-stage material

## Claims

1. Electric component (1) comprising
• a first electrode (8) and a second electrode (7),
• a lead frame (3) with a first part (4) and a second part (5), which are separated from each other, wherein a projecting part (9) of the first electrode (8) is conductively connected to the first part (4), wherein the second electrode (7) is conductively connected to the second part (5) and wherein the second electrode (7) is connected with the first part (4) and/or to the second part (5) via a B-stage material (11, 20) and
• an encapsulation (13), encapsulating at least the second electrode (7).

2. Electric component (1) according to claim 1, wherein the conductive connection between the second electrode (7) and the second part (5) is implemented via said B-stage material (20), wherein the B-stage material (20) is after final curing conductive.

3. electric component (1) according to claim 1 or 2, wherein the second electrode (7) is connected in a non-conductive way with the first part (4) via said B-stage material (11), wherein the B-stage material (11) is after final curing non-conductive.

4. Electric component (1) according to any of claims 1 to 4 comprising
• a capacitor element (2) comprising at least an anode terminal (8) used as first electrode (8) containing a projecting part (9); a solid electrolyte (6) and a cathodic layer (7) used as second electrode (8),
• the lead frame (3) with the first part (4) and the second part (5), which are separated to each other; wherein the cathodic layer (7) is connected to the second part (5) in a conductive manner via a conductive adhesive (12) and wherein a projecting part (9) of the anode terminal (8) is connected to the first part (4) in a conductive manner and wherein the cathodic layer (7) is in contact to the first part (4) via a B-stage material (11) in a non-conductive manner and
• an encapsulation (13) of the capacitor element (2), encapsulating at least the capacitor element (2) with the cathodic layer (7).

5. Electric component (1) according to claim 4, wherein said conductive adhesive (12) is a B-stage material.

6. Electric component (1) according to any of claims 1 to 3 comprising
• a capacitor element (2) comprising at least an anode terminal (8) used as first electrode (8) containing a projecting part (9); a solid electrolyte (6) and a cathodic layer (7) used as second electrode (8),
• the lead frame (3) with the first part (4) and the second part (5), which are separated to each other; wherein the cathodic layer (7) is connected to the second part (5) in a conductive manner via a B-stage material (20), which is after final curing conductive and wherein a projecting part (9) of the anode terminal (8) is connected to the first part (4) in a conductive manner and
• an encapsulation (13) of the capacitor element (2), encapsulating at least the capacitor element (2) with the cathodic layer (7).

7. Method for producing an electric component (1) comprising the steps:
• providing a lead frame (3) with a first part (4) and a second part (5), which are separated to each other,
• dispensing a B-stage material (11, 20) on the first part (4) and/or the second part (5) of the lead frame (3),
• pre-curing the B-stage material (11, 20),
• providing a first electrode (8) and a second electrode (7),
• connecting the first part (4) to the first electrode (8) in a conductive manner as well as connecting the second part (5) and the second electrode (7) in a conductive manner,
• final curing the B-stage material (11, 20) and
• encapsulating the second electrode (7) with an encapsulation (13).

8. Method for producing a capacitor (1) as an electric component (1) according to claim 7 comprising the steps:
• providing a lead frame (3) with a first part (4) and a second part (5), which are separated to each other,
• dispensing a B-stage material (11) on the first part (4) of the lead frame (3), which is at least after final curing non-conductive,
• dispensing a conductive adhesive (12) on the second part (5) of the lead frame (3),
• pre-curing the B-stage material (11) to provide a B-stage condition of the B-stage material (11),
• placing a capacitor element (2) on the lead frame (3), wherein the capacitor element (2) comprises at least an anode terminal (8) used as first electrode (8) containing a projecting part (9); a solid electrolyte (6) and a cathodic layer (7) used as second electrode (8), wherein the capacitor element (2) is in connected to the first part (4) of the lead frame (3) via the B-stage material (11) and the cathodic layer (7) is connected to the second part (5) of the lead frame (3) via the conductive adhesive (12),
• connecting the anode terminal (8) in a conductive manner with the first part (3) via a mechanical and/or material connection,
• curing the conductive adhesive (12) and final curing the B-stage material (11) and
• encapsulating the capacitor element (2) with the cathodic layer (7) with an encapsulation (13).

9. Method according to claim 8, wherein the final curing of the B-stage material (11) is reached at the curing or final curing temperature of the conductive adhesive (12) between the second part (5) and cathodic layer (7).

10. Method according any of claims 8 or 9, wherein the conductive adhesive (12) is also a B-stage material and wherein the said B-stage material is pre-cured in a single step together with the first B-stage material (11) to provide B-stage conditions of both B-stage materials.

11. Method for producing a capacitor (1) as an electric component (1) according to claim 7 comprising the steps:
• providing a lead frame (3) with a first part (4) and a second part (5), which are separated to each other,
• dispensing a B-stage material (20) on the second part (5) of the lead frame (3), which is after final curing conductive,
• pre-curing the B-stage material (20) to provide a B-stage condition of the B-stage material (20),
• placing a capacitor element (2) on the lead frame (3), wherein the capacitor element (2) comprises at least an anode terminal (8) used as first electrode (8) containing a projecting part (9); a solid electrolyte (6) and a cathodic layer (7) used as second electrode (8), wherein the cathodic layer (7) is connected to the second part (5) via the B-stage material (20),
• connecting the anode terminal (8) in a conductive manner to the first part (3) via a mechanical and/or material connection,
• final curing the B-stage material (20) and
• encapsulating the capacitor element (2) with the cathodic layer (7) with an encapsulation (13).

12. Method according to any of claims 8 to 11, wherein said pre-curing of at least the B-stage material (11, 20) is reached during a heating process at a temperature range between 70°C and 150°C lasting between 10 minutes and two hours, preferably during a heating process lasting about one hour at a temperature about 120°C, most preferred at a temperature lower than 150°C.

13. Method according to any of claims 8 to 12, wherein the final curing of at least the B-stage material (11, 20) is reached at a temperature range between 120°C and 250°C at a heating process lasting between 10 minutes and two hours, preferably reached at a temperature of about 175°C at a heating process lasting about one hour.

14. Method according to any of claims 3 to 13, wherein UV or visible light radiation is used to pre-cure at least the B-stage material (11, 20) to provide a B-stage condition of the B-stage material (11, 20).
